# EUROPÄISCHE PATENTSCHRIFT

(11) **EP 0 498 141 B1**
(45) Veröffentlichungstag und Bekanntmachung des Hinweises auf die Patenterteilung: **05.01.1994**
(21) Anmeldenummer: 91810093.4
(22) Anmeldetag: 08.02.1991
(51) Int. Cl.: G01F 1/66

(54) **Betriebsschaltung für Ultraschall-Volumendurchflussmessgeräte**
Operation circuit for ultrasonic volumetric flowmeters
Circuit d'alimentation pour débimètres volumétriques à ultra-son

(43) Veröffentlichungstag der Anmeldung: 12.08.1992
(73) Patentinhaber: Endress + Hauser Flowtec AG, CH-4153 Reinach BL 1 (CH)
(72) Erfinder: Steinacher, Michael, CH-4054 Basel (CH)
(74) Vertreter: Morstadt, Volker, Dipl.-Ing.

(56) Entgegenhaltungen:
- EP-A- 0 397 596
- WO-A-90/00723
- DE-A- 2 333 971
- GB-A- 2 079 939
- GB-A- 2 203 546

## Beschreibung

Die Erfindung besteht in einer Betriebsschaltung für Ultraschall-Volumendurchflußmeßgeräte mit zwei abwechselnd als Sender und Empfänger oder umgekehrt arbeitenden, einseitig geerdeten Ultraschallwandlern; mit einem Umschalter, der den jeweils als Empfänger arbeitenden Ultraschallwandler mit dem ersten Eingang einer Auswerteelektronik verbindet; mit einem Sendespannungsgenerator, der mit dem zweiten Eingang der Auswerteelektronik, ferner über einen ersten Widerstand mit dem ersten Spannungsverstärkers und schließlich über einen zweiten Widerstand mit dem Eingang eines zweiten Spannungsverstärkers verbunden ist, wobei die beiden Spannungsverstärker eine möglichst kleine Ausgangsimpedanz haben; mit einem ersten und mit einem zweiten Schalter, deren jeweilige Schaltstrecke einerseits am Eingang des jeweiligen Spannungsverstärkers liegt und andererseits geerdet ist, von denen ferner der eine geöffnet und der andere geschlossen ist und umgekehrt sowie von denen der erste am Eingang des ersten und der zweite am Eingang des zweiten Spannungsverstärkers liegt; und mit einer ersten und einer zweiten Impedanz von untereinander gleichem Real- und Imaginärteil, die den Ausgang des jeweiligen Spannungsverstärkers mit dem jeweiligen Ultraschallwandler und mit dem zugehörigen Eingang des Umschalters verbindet.

In der EP-A 397 596 (entsprechend US S/N 07/516,146) ist die Umschaltung von bei der Ultraschall-Volumendurchflußmessung verwendeten Ultraschallwandlern erläutert. Bei dieser Schaltung ist die zu dem als Sender wirkenden Ultraschallwandler fließende und die von dem als Empfänger wirkenden Ultraschallwandler abgenommene elektrische Leistung über die Schaltstrecken der Umschalter geführt. Dadurch geht die Impedanz der jeweiligen Schaltstrecke in die Gesamtimpedanz ein, die dem einzelnen Ultraschallwandler von der Betriebschaltung zugeordnet ist und als ihm vorgeschaltet oder als zu ihm parallelgeschaltet zu denken ist.

Insbesondere wenn die Umschalter durch elektronische Schalter, z.B. mittels Transistoren, realisiert sind, sind den Ultraschallwandlern aufgrund der von Schalterexemplar zu Schalterexemplar unterschiedlichen Impedanz je nachdem, ob sie als Empfänger oder Sender arbeiten, unterschiedlich große Gesamtwiderstände zugeordnet. Dies beeinflußt das Meßergebnis u.a. in der Form, daß die Nullpunktstabilität verschlechtert wird. Aber auch die Verlustleistung am Realteil der Impedanzen können störend sein.

Auch die GB-A-2 079 939 offenbart das Problem der Nullpunktsverschiebung, das dort durch eine Schaltung gelöst wird, die eine Stromquelle als Signalgenerator verwendet.

Nach der Erfindung jedoch werden diese Nachteile dadurch vermieden, daß in der Verbindung zwischen dem als Sender arbeitenden Ultraschallwandler und dem ihn speisenden Generator keine der Umschaltung dienenden Schaltstrecken angeordnet sind und daß die Weiterleitung der vom als Empfänger arbeitenden Ultraschallwandler aus dem Fluid aufgenommene Leistung an die Auswerteelektronik möglichst verlustlos erfolgt. Dadurch wird es ermöglicht, daß jedem Ultraschallwandler in seinen beiden Betriebszuständen (Empfänger oder Sender) dieselbe Gesamtimpedanz zugeordnet ist und daß praktisch keine, auf jeden Fall aber vernachlässigbare Verluste an den Impedanzen der Umschalter entstehen.

Nach einer Weiterbildung der Erfindung ist ein Zusatzumschalter vorgesehen, an dessen Ausgang der zweite Eingang der Auswerteelektronik, anstelle mit dem Sendespannungsgenerator verbunden zu sein, liegt und dessen einer Eingang am Ausgang des einen Spannungsverstärkers sowie dessen anderer Eingang am Ausgang des anderen Spannungsverstärkers angeschlossen ist, wobei Umschalter und Zusatzumschalter so gesteuert sind, daß der eine Ultraschallwandler direkt am einen Eingang der Auswerteelektronik und der Ausgang des zum anderen Ultraschallwandler gehörenden Spannungsverstärkers direkt am anderen Eingang der Auswerteelektronik liegt und umgekehrt. Nach einer Ausgestaltung der Erfindung können die Impedanzen hochohmige Widerstände sein.

Nach einer Abwandlung der Erfindung ist der erste Widerstand mit dem ersten Schalter und der zweite Widerstand mit dem zweiten Schalter vertauscht und die Widerstände sind niederohmig.

Bei dieser Abwandlung der Erfindung können die niederohmigen Widerstände durch Zusatzschalter ersetzt sein, und von den einseitig miteinander verbundenen Schaltern und Zusatzschaltern kann jeweils der eine geöffnet und der andere geschlossen sein und umgekehrt.

Besonders vorteilhaft läßt sich die Erfindung realisieren, wenn in deren Ausgestaltung (Zusatz)Schalter und (Zusatz)Umschalter elektronische Schalter sind.

Die Erfindung wird nun anhand der Figuren der Zeichnung näher erläutert, in der gleiche Teile mit denselben Bezugszeichen versehen sind.
- Fig. 1 zeigt: das teilweise schematisierte Schaltbild eines Ausführungsbeispiels der Erfindung,
- Fig. 2 zeigt: das teilweise schematisierte Schaltbild einer Weiterbildung der Erfindung,
- Fig. 3 zeigt: ausschnittsweise das teilweise schematisierte Schaltbild einer Abwandlung der Erfindung, die bei den Schaltungen der Fig. 1 und 2 angewendet werden kann,
- Fig. 4 zeigt: ausschnittsweise das teilweise schematisierte Schaltbild einer anderen Abwandlung der Erfindung, die bei den Schaltungen der Fig. 1 und 2 angewendet werden kann,
- Fig. 5 zeigt: das teilweise schematisierte Schaltbild einer anderen Weiterbildung der Erfindung, die bei den Schaltungen der Fig. 1 bis 4 angewendet werden kann, und
- Fig. 6 zeigt: das teilweise schematisierte Schaltbild einer Ergänzung der Weiterbildung nach Fig. 5, die ebenfalls bei den Schaltungen der Fig. 1 bis 4 angewendet werden kann.

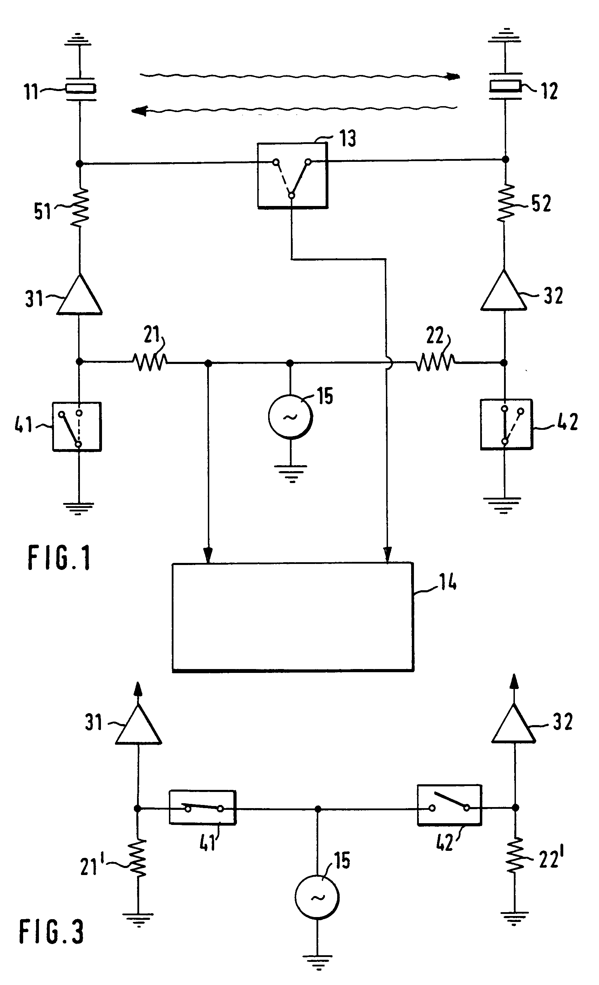

Die in den Fig. 1 bis 6 gezeigten Betriebsschaltungen sind zur Ansteuerung von Ultraschallwandlerpaaren vorgesehen, die bei Ultraschall-Volumendurchflußmeßgeräten eingesetzt werden. Dabei arbeitet jeder der mindestens zwei an, in oder um die Rohrwand eines ein zu messendes Fluid führenden Rohres herum angeordneten und einseitig geerdeten Ultraschallwandler 11, 12 durch entsprechende Umschaltung abwechselnd als Sender oder Empfänger. Dadurch wird einmal in Strömungsrichtung und einmal in Gegenströmungsrichtung gemessen, damit der Einfluß der Schallgeschwindigkeit des Fluids auf das Meßergebnis eliminiert werden kann.

Die Stellung der noch zu erläuternden Umschalter und Schalter ist in den Figuren immer so gezeichnet, daß der Ultraschallwandler 11 als Sender und der Ultraschallwandler 12 als Empfänger arbeitet.

Der mechanische Aufbau der Ultraschallwandler und deren Anbringung am Rohr sind in den Figuren nicht dargestellt, da diese nicht erfindungswesentlich sind; durch die antiparallelen Wellenlinien ist die Meßstrecke lediglich angedeutet.

Beim Ausführungsbeispiel nach Fig. 1 erfolgt die erwähnte Umschaltung durch einen Umschalter 13 in Zusammenwirken mit einem ersten Schalter 41 und einem zweiten Schalter 42. Durch den Umschalter 13 wird entweder der eine oder der andere Ultraschallwandler 11 bzw. 12 mit dem ersten Eingang einer Auswerteelektronik 14 verbunden. Sie erzeugt auch die für die Betätigung oder Steuerung der Schalter und Umschalter erforderlichen Signale. Aus Übersichtlichkeitsgründen sind die Steuerleitungen der Schalter und Umschalter nicht gezeichnet.

Für die Auswerteelektronik 14 eignet sich besonders gut eine Schaltung, wie sie in der WO-A 90/00723 (entsprechend US S/N 07/460,947) beschrieben ist; auf deren Einzelheiten braucht daher nicht näher eingegangen zu werden.

Die zur Erregung des als Sender arbeitenden Ultraschallwandlers erforderliche elektrische Leistung wird von einem Sendespannungsgenerator 15 erzeugt, dessen Ausgang mit dem zweiten Eingang der Auswerteelektronik 14 verbunden ist. Er liegt ferner einerseits über einen, bevorzugt hochohmigen, ersten Widerstand 21 am Eingang eines ersten Spannungsverstärkers 31 und andererseits über einen, bevorzugt ebenfalls hochohmigen, zweiten Widerstand 22 am Eingang eines zweiten Spannungsverstärkers 32. Die beiden Spannungsverstärker 31, 32 haben eine möglichst kleine Ausgangsimpedanz, und die beiden Widerstände 21, 22 sind aus Symmetriegründen möglichst gleich.

Bei der Erfindung wird somit der Sender also beabsichtigterweise an einer Wechselspannungsquelle mit niedrigem Innenwiderstand betrieben. Der an sich mögliche Betrieb von Ultraschallwandlern an einer Wechselstromquelle mit hohem Innenwiderstand, wie etwa in der GB-A-2 079 939, ist nach der Erfindung gerade nicht vorgesehen.

Der Verbindungspunkt von Widerstand 21 und Spannungsverstärker 31 ist über die Schaltstrecke eines Schalters 41 mit Erdpotential verbunden. In gleicher Weise ist für den Verbindungspunkt von Widerstand 22 und Spannungsverstärker 32 die Schaltstrecke eines Schalters 42 vorgesehen. Die Schalter 41, 42 sind somit einseitig geerdet. Wenn der eine von ihnen geschlossen ist, ist der andere geöffnet und nach dem Umschalten umgekehrt.

Zwischen dem Ausgang des jeweiligen Spannungsverstärkers und dem zugehörigen Ultraschallwandler ist eine erste Impedanz 51 bzw. eine zweite Impedanz 52 eingefügt, die beide denselben Real-und Imaginärteil aufweisen. Somit haben der Ultraschallwandler 11, die erste Schaltstrecke des Umschalters 13 und die Impedanz 51 einen gemeinsamen Verbindungspunkt und ebenso der Ultraschallwandler 12, die zweite Schaltstrecke des Umschalters 13 und die Impedanz 52. Die Sendespannung gelangt vom Sendespannungsgenerator 15 aus über den Widerstand 21 an den Eingang des Spannungsverstärkers 31. Bei geöffnetem Schalter 41 ist Schalter 42 geschlossen. Daher liegt am Eingang des Spannungsverstärkers 32 keine Spannung, da er geerdet ist, und an seinem Ausgang tritt ebenfalls keine Spannung auf, da keine Spannung zu verstärken ist. Somit ist aber das ultraschallwandler-abgewandte Ende der Impedanz 52 virtuell ebenfalls geerdet.

Die vom Ultraschallwandler 11 als Sender an das Fluid abgegebene Schall-Leistung wird vom Ultraschallwandler 12 als Empfänger in elektrische Empfangsleistung - im wesentlichen in eine Wechselspannung - umgewandelt, und gelangt über die zweite Schaltstrecke des Umschalters 13 an den zweiten Eingang der Auswerteelektronik 14. Da die Betriebsschaltung symmetrisch aufgebaut ist, gilt nach Umschaltung Entsprechendes für den Fall, daß Ultraschallwandler 12 als Sender und Ultraschallwandler 11 als Empfänger arbeitet.

Lediglich dem jeweiligen als Empfänger betriebenen Ultraschallwandler ist die an ihm angeschlossene Impedanz virtuell parallelgeschaltet, d.h. dieser Ultraschallwandler ist mit dieser Impedanz abgeschlossen. Dagegen ist diese Impedanz dem als Sender betriebenen Ultraschallwandler in Serie vorgeschaltet.

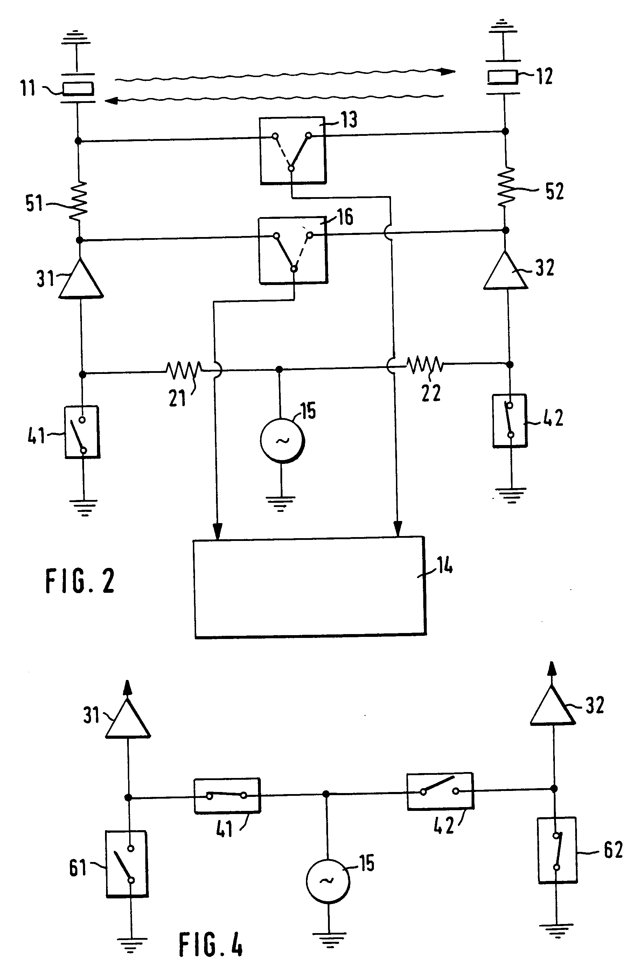

Wie ersichtlich liegt zwischen Sendespannungsgenerator 15 und Ultraschallwandler 11 keine Schaltstrecke, und an der zweiten Schaltstrecke des Umschalters 13 entsteht praktisch keine Verlustleistung, da die beiden Eingänge der Auswerteelektronik 14 hochohmig sind und somit nur ein vernachlässigbarer Strom vom Ultraschallwandler 12 zum Eingang der Auswerteelektronik 14 fließt.
Die Betriebsschaltung nach Fig. 1 erfordert an sich bei gewünschter hoher Meßgenauigkeit und für einen möglichst kleinen Nullpunktfehler, daß die beiden Spannungsverstärker 31, 32 möglichst phasengenau zueinander sind. Sollte dies mit vertretbarem Aufwand nicht realisierbar sein, so kann entsprechend der Weiterbildung nach Fig. 2 ein Zusatzumschalter 16 vorgesehen werden, dessen erster Eingang am Ausgang des ersten Spannungsverstärkers 31 und dessen zweiter Eingang am Ausgang des zweiten Spannungsverstärkers 32 angeschlossen ist. Der erste Eingang der Auswerteelektronik 14 liegt in diesem Fall nicht am Sendespannungsgenerator 15, sondern am Ausgang des Zusatzumschalters 16.

Nun gelangt die Sendespannung nicht direkt wie bei Fig. 1, sondern erst über den Widerstand 21 und den Spannungsverstärker 31 an die Auswerteelektronik 14, wodurch allfällige Unterschiedlichkeiten im Phasenverhalten der beiden Spannungsverstärker 31, 32 das Meßergebnis nicht beeinflussen.

Um eine störende Spannungsteilung zwischen dem jeweiligen Widerstand 21 bzw. 22 und dem Schaltstreckenwiderstand des zugehörigen Schalters 41 bzw. 42 zu vermeiden, wird man darauf achten, die beiden Widerstände ausreichend hochohmig zu machen. Sollte dies zu Schwierigkeiten führen, so können nach der in Fig. 3 ausschnittsweise gezeigten Abwandlung der Erfindung die Lage von jeweiligem Widerstand 21 bzw. 22 mit zugehörigem Schalter 41 bzw. 42 vertauscht und die Widerstände niederohmig gemacht werden, so daß nunmehr die Widerstände 21', 22' einseitig geerdet sind, während zwischen Sendespannungsgenerator 15 und dem jeweiligen Eingang der beiden Spannungsverstärker 31, 32 der Schalter 41 bzw. 42 liegt.

In der eingangs erwähnten EP-A 397 596 ist erläutert, mit welchen Mitteln ein zwischen Sender- und Empfängerteil der Schaltung insb. dann auftretendes Übersprechen vermieden werden kann, wenn elektronische Schalter als Schaltstrecken verwendet werden. Da nach einer bevorzugten Ausgestaltung der Erfindung diese Realisierung ebenfalls vorgesehen ist, kann zur Übersprechkompensation auf die in dieser EP-A offenbarte Lösung zurückgegriffen werden.

Die Fig. 4 zeigt zunächst allerdings eine Möglichkeit, wie das Übersprechen bei der Schaltung nach Fig. 3 vermindert werden kann, ohne die Lehre der EP-A 397 596 anwenden zu müssen. Nach Fig. 4 sind die Widerstände 21', 22' von Fig. 3 durch je einen Zusatzschalter 61, 62 ersetzt, wobei von den einseitig miteinander verbundenen Schaltern und Zusatzschaltern 41/61, 42/62 jeweils der eine geöffnet und der andere geschlossen ist und nach dem Umschalten umgekehrt.

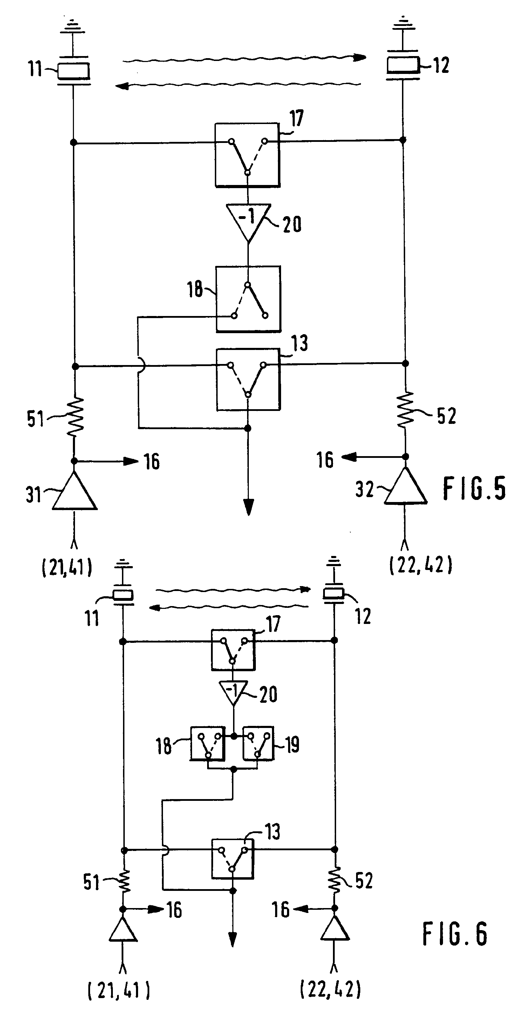

Die Fig. 5 und 6 zeigen die Anwendung des in der EP-A 397 596 beschriebenen Prinzips auf die Betriebsschaltung der Erfindung. Da für das Übersprechen bei der Schaltung nach Fig. 1 im wesentlichen die jeweils nichtleitende Schaltstrecke des Umschalters 13 die Ursache ist, muß diese kompensiert werden. Dazu ist nach Fig. 5 der weitere Umschalter 17 vorgesehen, von dem der erste Eingang mit dem ersten Ultraschallwandler 11, der zweite Eingang mit dem zweiten Ultraschallwandler 12 und der Ausgang mit dem Eingang eines invertierenden Einheitsverstärkers 20 verbunden ist. Die Schaltstellung des weiteren Umschalters 17 ist immer entgegengesetzt zu der des Umschalters 13.

Der Ausgang des invertierenden Einheitsverstärkers 20 ist über eine immer nichtleitende Schaltstrecke 18 mit dem Ausgang des Umschalters 13 verbunden, wobei diese Schaltstrecke auf demselben Halbleiterchip und in derselben Halbleitertechnologie wie die übrigen Schaltstrecken der Betriebsschaltung zu realisieren ist.

Sind diese also z.B. CMOS-Schaltstrecken, so muß man die Schaltstrecke 18 auch als eine CMOS-Schaltstrecke realisieren.

Soll in der Schaltung nach Fig. 5 auch die jeweils nichtleitende Schaltstrecke des weiteren Umschalters 17 kompensiert werden, so ist, wie in Fig. 6 gezeigt ist, der immer nichtleitenden Schaltstrecke 18 eine weitere immer nichtleitende Schaltstrecke 19 parallelzuschalten.

Anstatt die Ultraschallwandler galvanisch mit dem Ausgang des jeweiligen Spannungsverstärkers zu koppeln, kann auch eine transformatorische Kopplung vorgesehen werden. Dann liegt zweckmäßigerweise die mit dem Ultraschallwandler verbundene Wicklung einseitig an einem der Metallteile des Ultraschall-Volumendurchflußmeßgeräts, während die andere Wicklung einseitig geerdet ist bzw. also auf dem Massepotential der Betriebsschaltung liegt.

## Patentansprüche

1. Betriebsschaltung für Ultraschall-Volumendurchflußmeßgeräte mit zwei abwechselnd als Sender und Empfänger oder umgekehrt arbeitenden, einseitig geerdeten Ultraschallwandlern (11, 12); mit einem Umschalter (13), der den jeweils als Empfänger arbeitenden Ultraschallwandler mit dem ersten Eingang einer Auswerteelektronik (14) verbindet; mit einem Sendespannungsgenerator (15), der mit dem zweiten Eingang der Auswerteelektronik (14), ferner über einen ersten Widerstand (21) mit dem Eingang eines ersten Spannungsverstärkers (31) und schließlich über einen zweiten Widerstand (22) mit dem Eingang eines zweiten Spannungsverstärkers (32) verbunden ist, wobei die beiden Spannungsverstärker eine möglichst kleine Ausgangsimpedanz haben; mit einem ersten und mit einem zweiten Schalter (41, 42), deren jeweilige Schaltstrecke einerseits am Eingang des jeweiligen Spannungsverstärkers (31, 32) liegt und andererseits geerdet ist, von denen ferner der eine geöffnet und der andere geschlossen ist und umgekehrt sowie von denen der erste (41) am Eingang des ersten (31) und der zweite (42) am Eingang des zweiten Spannungsverstärkers (32) liegt; und mit einer ersten und einer zweiten Impedanz (51, 52) von untereinander gleichem Real- und Imaginärteil, die den Ausgang des jeweiligen Spannungsverstärkers (31, 32) mit dem jeweiligen Ultraschallwandler (11, 12) und mit dem zugehörigen Eingang des Umschalters (13) verbindet.

2. Betriebsschaltung nach Anspruch 1 mit einem Zusatzumschalter (16), an dessen Ausgang der zweite Eingang der Auswerteelektronik (14), anstelle mit dem Sendespannungsgenerator (15) verbunden zu sein, liegt und dessen einer Eingang am Ausgang des einen Spannungsverstärkers sowie dessen anderer Eingang am Ausgang des anderen Spannungsverstärkers angeschlossen ist, wobei Umschalter (13) und Zusatzumschalter (15) so gesteuert sind, daß der eine Ultraschallwandler direkt am einen Eingang der Auswerteelektronik (14) und der Ausgang des zum anderen Ultraschallwandler gehörenden Spannungsverstärkers direkt am anderen Eingang der Auswerteelektronik liegt und umgekehrt.

3. Betriebsschaltung nach Anspruch 1 oder 2, bei der die Widerstände (21, 22) hochohmig sind.

4. Betriebsschaltung nach Anspruch 1 oder 2, bei der der erste Widerstand (21) mit dem ersten Schalter (41) und der zweite Widerstand (22) mit dem zweiten Schalter (42) vertauscht ist und die Widerstände (21', 22') niederohmig sind.

5. Betriebsschaltung nach Anspruch 4, bei der die niederohmigen Widerstände (21', 22') durch Zusatzschalter (61, 62) ersetzt sind und von den einseitig miteinander verbundenen Schaltern und Zusatzschaltern (41/61, 42/62) jeweils der eine geöffnet und der andere geschlossen ist und umgekehrt.

6. Betriebsschaltung nach einem der Ansprüche 1 bis 5, bei der Schalter und Zusatzschalter (41, 42; 61, 62) sowie Umschalter und Zusatzumschalter (13, 15) elektronische Schalter sind.

## Claims

1. Circuit for operating ultrasonic volumetric flowmeters comprising two ultrasonic transducers (11, 12) operating alternately as a transmitter and receiver or vice versa and each having one end grounded, a changeover switch (13) connecting the respective ultrasonic transducer operating as the receiver to the first input of evaluation electronics (14), a transmit voltage generator (15) which is connected to the second input of the evaluation electronics, through a first resistor (21) to the input of a first voltage amplifier (31), and through a second resistor (22) to the input of a second voltage amplifier (32), the two voltage amplifiers (31, 32) having as low an output impedance as possible, a first and a second switch (41, 42) each having one end of its switching path connected to the input of the associated voltage amplifier (31, 32) and the other end grounded, and one of which is open and the other closed and vice versa, and of which the first (41) is connected to the input of the first voltage amplifier (31) and the second (42) to the input of the second voltage amplifier (32), and a first and a second impedance (51, 52) having the same real and imaginary parts and each connecting the output of the associated voltage amplifier (31, 32) to the associated ultrasonic transducer (11, 12) and to the associated input of the changeover switch (13).

2. A circuit as claimed in claim 1 and comprising an additional changeover switch (16) whose output is coupled, instead of the transmit voltage generator (15), to the second input of the evaluation electronics (14), and one input of which is connected to the output of one of said voltage amplifiers and the other input of which is connected to the output of the other voltage amplifier, with the changeover switch (13) and the additional changeover switch (16) controlled so that one of the ultrasonic transducers is connected directly to one input of the evaluation electronics (14) and the output of the voltage amplifier associated with the other ultrasonic transducer is connected directly to the other input and vice versa.

3. A circuit as claimed in claim 1 or 2 wherein the resistors (21, 22) are high-value resistors.

4. A circuit as claimed in claim 1 or 2 wherein the first resistor (21) and the first switch (41) as well as the second resistor (229 and the second switch (42) are interchanged, and wherein the resistors (21', 22') are low-value resistors.

5. A circuit as claimed in claim 4 wherein the low-value resistors (21', 22') are replaced by additional switches (61, 62), and wherein of the switches and additional switches (41/61, 42/62) connected together at one end, one is open and the other closed and vice versa.

6. A circuit as claimed in any one of claims 1 to 5 wherein switches and additional switches (41, 42; 61, 62) as well as changeover switches and additional changeover switches (13, 15) are electronic switches.

## Revendications

1. Circuit de commande pour débitmètres volumiques à ultrasons, comprenant deux transducteurs à ultrasons (11, 12), travaillant alternativement en émetteur et récepteur et inversement, et mis à la masse par un côté, un commutateur (13) qui connecte le transducteur à ultrasons travaillant en récepteur à une première entrée d'une électronique d'analyse (14); un générateur (15) de tension d'émission qui est connecté à la deuxième entrée de l'électronique d'analyse (14) et connecté par ailleurs à l'entrée d'un premier amplificateur de tension (31) à travers une première résistance (21) et, finalement, à l'entrée d'un deuxième amplificateur de tension (32) à travers une deuxième résistance (22), les deux amplificateurs de tension ayant une impédance de sortie aussi basse que possible; un premier et un deuxième interrupteurs (41, 42) dont la zone de coupure est connectée d'un côté à l'amplificateur de tension respectif et mise à la masse de l'autre côté, et dont l'un est ouvert et l'autre est fermé et inversement, le premier (41) de ces interrupteurs étant connecté à l'entrée du premier amplificateur de tension (31) et le deuxième (42) à l'entrée du deuxième amplificateur de tension (32); et une première et une deuxième impédances (51, 52) ayant les mêmes parties réelles et imaginaires, qui connectent la sortie de l'amplificateur de tension (31, 32) respectif au transducteur d'ultrasons (11, 12) respectif et à l'entrée correspondante du commutateur (13).

2. Circuit de commande selon la revendication 1, comprenant un commutateur additionnel (16) à la sortie duquel la deuxième entrée de l'électronique d'analyse (14) est connectée, au lieu d'être connectée au générateur de tension d'émission (15), et dont une entrée est connectée à la sortie d'un premier amplificateur de tension, tandis que son autre entrée est connectée à la sortie de l'autre amplificateur de tension, le commutateur (13) et le commutateur additionnel (15) étant commandés de telle manière que l'un des transducteurs à ultrasons soit connecté directement à une entrée de l'électronique d'analyse (14) et que la sortie de l'amplificateur de tension appartenant à l'autre transducteur à ultrasons est connectée directement à l'autre entrée de l'électronique d'analyse, et inversement.

3. Circuit de commande selon la revendication 1 ou 2 dans lequel les résistances (21, 22) sont de haute valeur ohmique.

4. Circuit de commande selon la revendication 1 ou 2 dans lequel la première résistance (21) est intervertie avec le premier interrupteur (41) et la deuxième résistance (22) est intervertie avec le deuxième interrupteur (42) et les résistances (21', 22') sont de basse valeur ohmique.

5. Circuit de commande selon la revendication 4, dans lequel les résistances à basse valeur ohmique (21', 22') sont remplacées par des interrupteurs additionnels (61, 62), et, parmi les interrupteurs et interrupteurs additionnels (41/61, 42/62) qui sont connectés l'un à l'autre par un côté, l'un est ouvert et l'autre fermé, et inversement.

6. Circuit de commande selon une des revendications 1 à 5, dans lequel l'interrupteur et l'interrupteur additionnel (41, 42; 61, 62) ainsi que le commutateur et le commutateur additionnel (13, 15) sont des interrupteurs électroniques.
